# EUROPÄISCHE PATENTSCHRIFT

(11) **EP 1 294 996 B1**
(45) Veröffentlichungstag und Bekanntmachung des Hinweises auf die Patenterteilung: **14.05.2008**
(21) Anmeldenummer: 01940011.8
(22) Anmeldetag: 01.06.2001
(51) Int. Cl.: E04F 15/04, C09J 5/04, C09J 5/00

(54) **System aus Bauteilen relativ geringer Dicke**
System of relatively planar components
Système de composants relativement plats

(30) Priorität: 06.06.2000 AT 9922000
(43) Veröffentlichungstag der Anmeldung: 26.03.2003
(73) Patentinhaber: Interglarion Limited, 2404 Engomi, Nikosia (CY)
(72) Erfinder: KNAUSEDER, Franz, A-5071 Wals (AT)
(74) Vertreter: Struck, Norbert
(86) Internationale Anmeldenummer: PCT/AT2001/000184
(87) Internationale Veröffentlichungsnummer: WO 2001/094720

(56) Entgegenhaltungen:
- WO-A-94/04773
- WO-A-97/47834
- WO-A-98/58142
- DE-A- 19 547 864
- DE-U- 29 703 962
- GB-A- 2 133 374
- US-A- 5 944 938

## Beschreibung

Bei der Erfindung handelt es sich um ein System zum Verbinden flächiger Bauteile relativ geringer Dicke entlang ihrer umlaufenden Schmalseiten, welches einfach und dauerhaft herstellbar sein soll, wobei für ein Verkleben der Erfindungselemente der aktivierbare Klebstoff und der zugehörige Aktivator bereits werkseitig voraufgetragen sein sollen, damit auf dem Verlegeort kein langwieriges Auftragen von Klebstoffen auf die Verbindungselemente erforderlich ist. Dadurch wird auch erreicht, daß immer die vorgesehene Klebstoffmenge exakt eingehalten wird.

Die Druckschriften WO 94/04773, WO 97/47834, WO 98/58142 offenbaren ein System aus Bauteilen relativ geringer Dicke, die entlang ihrer umlaufenden Schmalseiten miteinander verbunden werden können, wobei an den zu verbindenden Flächen nach dem Nut-Feder-Prinzip zusammenwirkende Verbindungsorgane vorgesehen sind, die Rastorgane umfassen.

Aus der Druckschrift US 5944938 ist bekannt, eine erste Komponente eines Zweikomponenten-Klebers auf einen ersten Gegenstand aufzutragen und eine zweite Komponente auf einen zweiten Gegenstand. Im Anschluss daran werden die mit den Komponenten versehenen Flächen gegeneinander gedrückt, um so zwei Gegenstände miteinander zu verkleben.

Die Druckschrift GB 2 133 374 A offenbart einen in Kapseln untergebrachten Zweikomponenten-Klebers.

Aus der Druckschrift DE 195 47 864 geht das Verkleben von Holzwerkstoffen mit einem wässrigen Klebstoff hervor, bei dem eine zu verklebende Seite mit einer hydrophobierenden Substanz versehen wird, um Quelleffekte klein zu halten.

Aus DE-29703962 U1 ist es bereits bekannt, bei herkömmlichen Nut-Federverbindungen von Paneelen, Bodenbrettern, Deckenverkleidungen u.dgl. an den an die Oberflächen anschließenden, zum Anlegen an das nächste Verkleidungselement vorgesehenen senkrecht zur Oberfläche verlaufenden Flächen werkseitig Klebstoff aufzubringen, sodaß bei diesen bekannten Ausbildungen durch das Zusammenfügen der Nut-Federverbindungen ein Verkleben der einzelnen Elemente entlang der an die Oberfläche anschließenden Flächen erfolgt, um solcherart eine dichte Oberfläche zu erhalten.. Eine derartige Ausbildung hat den Nachteil, daß auf Grund des verwendeten Klebstoffes, nämlich eines Kontaktklebstoffes, entweder die beiden aneinander zur Anlage kommenden Flächen mit erheblichem Druck aneinandergedrückt werden müßen, wobei nachträgliches Einjustieren etwa in Längsrichtung der Klebefuge zwecks Schließung einer Querfuge nicht mehr möglich ist

Es sind weiters bereits Ausbildungen bekannt, bei welchen die Nut-Feder-Verbindung mit Rastorganen versehen ist, um ein gegenseitiges vorgespanntes Fixieren aneinanderliegender Bauteile ohne das Einbringen von Kleber zu erreichen. Dazu sind neben zusätzlichen mit Vertiefungen in den Nutwangen zusammenwirkenden Vorsprüngen an den Federflanken auch an den Plaftenrückseiten vorgesehene Klammern od.dgl. bekannt.

Insbesondere ist z.B. aus dem AT-Patent 405560 Verbindungen bekannt, mit welchen zwei aneinander anliegende platten- bzw. leistenförmige Bauteile miteinander verrastet werden, wobei die Verbindungen nach dem Nut-Feder-Prinzip zusammenwirken, bei welchen die Nutflanken, bzw eine der beiden Flanken, vom Nutboden weg divergieren, und im Bereich des nutfemen Endes unter einem größeren Winkel als der Winkel der Divergierung konvergieren, wobei die Mündungsbreite der Nut größer ist als der in Einschubrichtung vorderste Bereich der Feder, welche von diesem vordersten Bereich ausgehend, unter dem gleichen Winkel wie die Nutwangen divergierende Keilflächen, bzw. eine der der Nutform angepaßte Keilfläche, aufweist, die in Übereinstimmung mit dem Nutquerschnitt in dem in Einschubrichtung der Feder hinteren Bereich derselben je eine Hinterschneidung aufweist, deren an die Keilflächen anschließenden Begrenzungsflächen unter dem gleichen Winkel wie die Nutenwangen zu einem am Bauteil anschließenden Verbindungssteg konvergieren. Es schnappt dabei nach Einschieben der Feder in die Nut der mit der konvergierenden Nutwangenfläche versehene Vorsprung der Nutwangen in die Hinterschneidung der Feder ein, wobei der konvergierende Nutwangenbereich an den zum Verbindungssteg hin führenden Keilflächen entlanggleitet und damit die Feder in die Nut zieht.

### ZUSAMMENFASSUNG DER ERFINDUNG

Die Erfindung beruht nun auf einer Vorleimung an jenen Nutflächen bzw. Federflächen einrastender Nut-Federverbindungen, welche durch das selbsttätige Hineinziehen der Feder in die Nut aneinandergepreßt werden und in dieser Lage durch die Rastverbindung fixiert sind. Dadurch kann auf zusätzliche Fixierungshilfsmittel für das Zusammenhalten der Bauteile während der Abbindephase verzichtet werden; dies ergibt automatisch eine gesicherte Verbindung.

### KURZE BESCHREIBUNG DER ZEICHNUNG

Fig. 1 zeigt eine erste Ausführungsvariante der erfindungsgemäßen Anordnung schematisch, u.zw.: Fig. 1 A einer mit dem Klebstoffautrag in der Nut versehenen Ausbildung vor dem Zusammenfügen, Fig. 1 B einer mit dem Klebstoffauftrag an den Federflanken versehenen Ausführung und Fig. 1 C die beiden Bauteile zusammengefügt, wobei in dieser Lage kein Unterschied zwischen der Ausbildung gemäß Fig. 1 A und Fig. 1 B besteht.

Fig. 2 ist eine der Fig. 1 analoge Darstellung einer in bezug auf die Querschnittsform von Nut und Feder abgewandelten Ausführungsvariante.

Fig. 3 gibt eine ebenfalls in bezug auf die Querschnittsform von Nut und Feder abgewandelte Ausführungsvariante in zusammengefügtem Zustand der Bauteile wieder.

Fig. 4 gibt die Ausführungsvariante gemäß Fig. 2 in größerem Maßstab wieder.

Fig. 5 veranschaulicht perspektivisch einen mit einer Nut versehenen Bauteil mit voraufgetragener Klebstoffraupe.

### GENAUE BESCHREIBUNG DER ZEICHNUNG

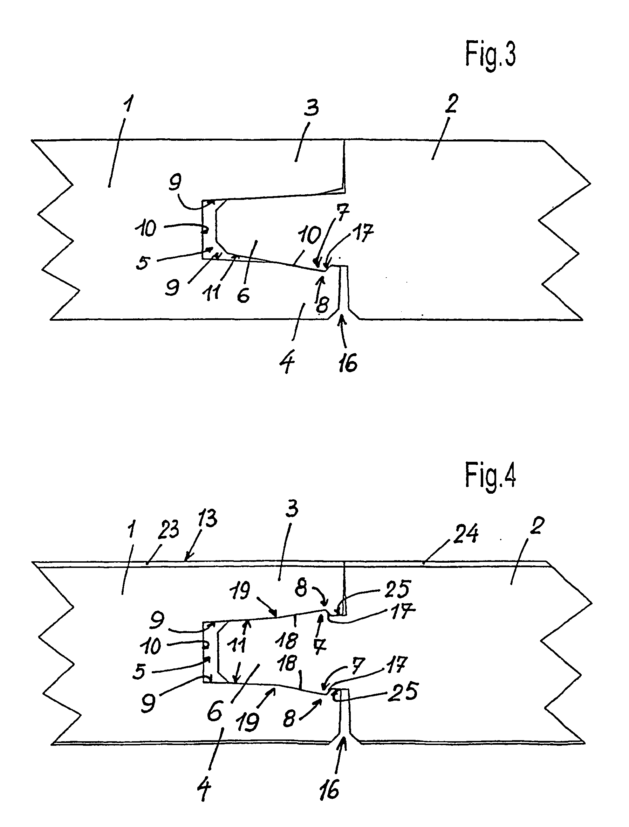

Fig. 3 und 4 zeigen zwei miteinander verbundene Bauteile 1,2, wobei in dem einen Bauteil 1 eine Nut 5 ausgebildet ist, in die eine vom anderen Bauteil 2 abgehende Feder 6 einführbar ist. Die Bauteile 1,2 liegen mit ihren Stirnflächen im nutzflächennahen Bereich fest aneinander bzw. bilden im bodenseitigen Bereich gegebenenfalls einen Spalt 16 aus. Dieser in der Zeichnung dargestellte Spalt nicht zwingend, sondern wird lediglich nach Bedarf vorgesehen. Die insbesondere aus Holz, Holzwerkstoffen oder Kunststoff bestehenden Bauteile 1,2 können mit Beschichtungen 23,24 versehen sein, um entsprechende Oberflächenwerte bzw. ein entsprechendes Aussehen zu erhalten.

Auf der Feder 6 bzw. den Federkeilflächen 11 und in der Nut 5 bzw. auf den Nut- bzw. Seitenflächen 9 der Nut 5 sind aneinander angepaßte Verriegelungselemente 7,8 vorgesehen. Diese Verriegelungselemente können von Vorsprüngen und/oder Vertiefungen ausgebildet sein, die miteinander zusammenwirken bzw. verrastbar sind. Die Querschnittsformen der Vertiefungen und zugehörigen Erhebungen 7,8 entsprechen einander, sodaß sie satt aneinander anliegen bzw. verriegelbar sind.

Im zusammengefügten Zustand der Bauteile 1,2 stehen die Verriegelungselemente 7,8 miteinander in Eingriff. Die Verriegelungselemente 7,8 sind insbesondere über die gesamte Länge der Längs- und/oder Schmalseiten der Bauteile 1,2 ausgebildet.

Gemäß Fig. 3 ist an wenigstens einer Federkeilfläche 11 ein Vorsprung 7 ausgebildet, der von einer Vertiefung 8 in der anliegenden Nutwangenfläche 9 aufgenommen wird. Beim Einführen der Feder 6 in die Nut 5 werden die beiden Nutwangen 3,4 der Nut 5 elastisch auseinanderbewegt.

Der Querschnitt des Vorsprunges 7 bzw. der Vertiefung 8 ist dreieckförmig, wobei die näher zur Nutöffnung gelegene Dreieckseite 17 kürzer und stärker geneigt ist als die näher dem Nutgrund 10 gelegene Dreieckseite 18. Beim Einführen der Feder 6 in die Nut 5 gleitet die längere Seite 18 des Vorsprunges 7 auf der Innenkante bzw. einer in diesem Bereich ausgebildeten Abschrägung der Vorderkante der Nutwange 3 so lange bis der Vorsprung 7 diese Innenkante 25 überwunden hat und von der Vertiefung 8 aufgenommen wird.

Für das Verbinden ist es vorteilhaft, wenn die nutgrundnahe Dreieckseite 18 etwa vier- bis achtmal, vorzugsweise fünf- bis siebenmal, so lang ist als die nutgrundferne Dreieckseite 17 und wenn der Winkel zwischen den beiden Dreieckseiten 17,18 von 100 bis 140°, insbesondere von 110 bis 130°, beträgt.

Zur Erleichterung des Einführens ist es vorteilhaft, wenn die innenliegenden Endkanten der Feder 6 mit einer Abschrägung und/oder die innenliegende Endkante des rast- bzw. verriegelungselementfreien Nutschenkels 4 mit einer Abschrägung versehen sind.

Zur Ausbildung einer definierten gegenseitigen Lage der Bauteile 1,2 kann es zweckmäßig sein, wenn der Winkel zur Nutz- bzw. Oberfläche der längeren Dreieckseite 18 des Vorsprunges 7 auf der Feder 6 dem Winkel bzw. der Neigung, insbesondere des Vorderbereiches, der Federkeilfläche 11 entspricht, die in ihrem Vorderbereich im Abstand von der Nutwangenfläche 9 verläuft. Die verriegelungselementfreie Federfläche (s. Fig. 3) kann dabei über den Großteil ihrer Länge an der Nutwangenfläche 9 anliegen und beide Flächen nähern sich vom Nutgrund 10 her gesehen der Oberfläche bzw. Nutzfläche der beiden Bauelemente 1,2. Auf diese Weise dienen diese beiden Flächen 9,11 als Gleit- bzw. Führungsflächen und unterstützen das Auseinanderspreizen der Nutflanken 3,4 bei Gleiten des Vorsprungs 7 über die Außenkante bzw. Gleitfläche der Flanke 3.

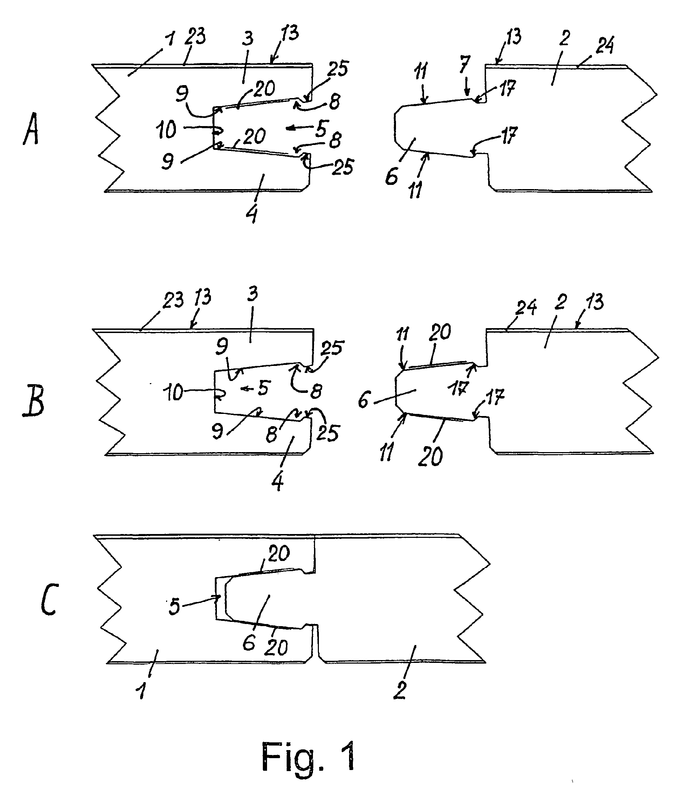

Bei einer vorteilhaften Ausführungsform gemäß Fig. 1, 2, und 4 ist vorgesehen, daß an den beiden gegenüberliegenden Federflächen 11, insbesondere symmetrisch liegende Vorsprünge 7 oder Vertiefungen 8 und auf beiden anliegenden Nutflächen 9 an diese Vorsprünge 7 bzw. Vertiefungen 8 angepaßte Vertiefungen und Vorsprünge ausgebildet sind bzw. daß Nut 5 und Feder 6 schwalbenschwanzförmig ausgebildet und aneinander angepaßt sind. Diese Ausführungsform ermöglicht eine doppelte Verriegelung der beiden Bauelemente 1,2.

Bei dieser Ausführungsform geht die längere Dreieckseite 18 bzw. die von dieser gebildete Fläche des Vorsprunges 7 unter Ausbildung eines Knickes 19 in den vorderen Bereich der Federkeilfläche 11 über; die längere Dreieckseite 18 und dieser vordere Bereich der Federkeilfläche 11 liegen satt aneinander an; auf diese Weise kann eine sehr exakte Verbindung der Bauteile 1,2 erreicht werden und gleichzeitig wird gewährleistet, daß die Bauteile 1,2 unter Druck aneinander anliegen, sodaß aufgrund des Zusammenwirkens der Dreiecksflächen 17 mit den zugehörigen Gegenflächen ein Spalt an der Nutzfläche 13 bzw. ein Voneinander-Entfernen der Bauteile 1,2 im Zuge ihrer Benutzung vermieden wird.

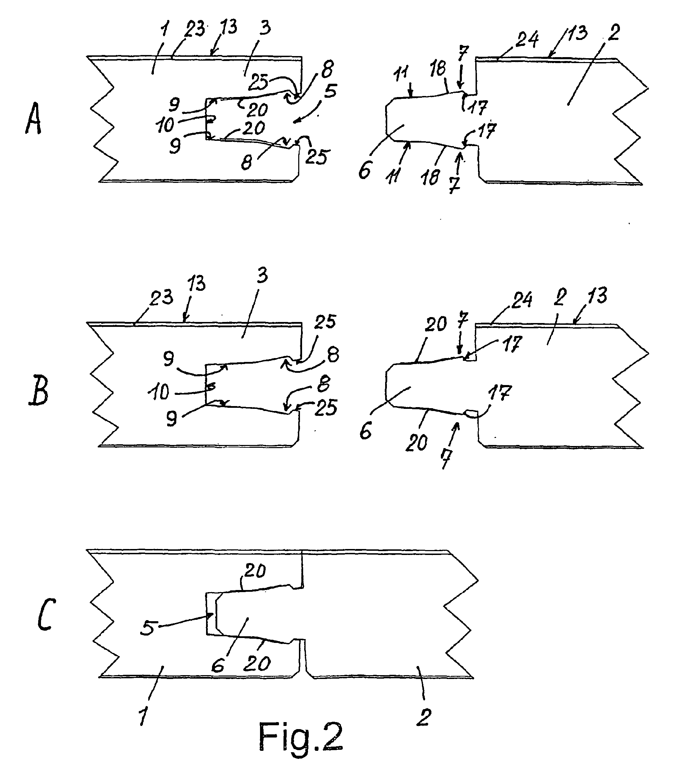

Mit 20 ist in den Fig, 1 und 2 der Klebstoffauftrag angedeutet, wobei, wie später im Detail dargelegt werden wird, der Klebstoffauftrag entweder an der Nutflankenwandung 9 (Fig. 1 A oder Fig. 2 A) oder an den Federkeilflächen 11 (Fig. 1B oder Fig. 2B) vorgesehen sein kann, wobei dann auf den jeweils zugeordneten Gegenflächen ein Kleberaktivator od.dgl. aufgebracht wird. Bei Verwendung von Zweikomponentenklebem kann die eine Komponente an der einen Fläche und die andere Komponente an der jeweils zugeordneten Gegenflächen vorgesehen sein.

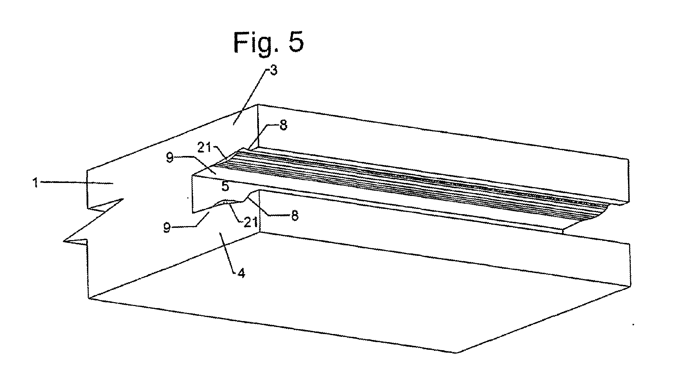

In Fig. 5 ist der Klebstoffauftrag in Form einer Kleberraupe 21 schematisch wiedergegeben.

Vorab mit einem Klebemittel ausgerüstete Paneele haben den eklatanten Vorteil, daß die Zahl der Handgriffe und Manipulationsschritte beim Verlegen der Paneele vor Ort wesentlich reduziert ist und daß der sowohl vom professionellen Handwerker als auch vom Heimwerker als zeitraubend und unangenehm empfundene Schritt eines mengenmäßig möglichst gleichmäßigen Ein- und Auftragens einer klebrigen Substanz in ausreichender, jedoch nicht überschüssiger Menge über jeweils die gesamte seitliche, z.B. bis zu 2m betragende Länge der Nuten und/oder Federn der Paneele an der Verlegestelle selbst vermieden ist. Es fällt damit die Problematik eines vorzeitigen Abbindens des Klebestoffes bei Verzögerungen im Laufe des Verlege-Vorganges, welche ein praktisch fugenfreies Fügen unmöglich macht, weg, aber auch das unangenehme Ausquellen überschüssigen Klebemittels, das möglichst sofort nach dem Austreten aus den Fugen zu entfernen ist, um Fleckenbildung auf der Dekorschicht zu vermeiden.

Bei mit Rastorganen versehenen Verbindungen fällt zusätzlich noch ein allfälliges Fixieren der aneinanderliegenden Paneele weg, da durch die Rastorgane eine Vorspannung in die Fixierung eingebracht wird, die ein Festhalten während des Abbindens des Klebers bewirken. Die Form und Ausbildung der Rastorgane ist dabei nicht kritisch.

Der Klebstoff, bzw. der zugehörige Klebeaktivator in welcher der Grundformen sie nun in den Nuten oder auf den Federn der Paneele auch vorliegen mögen, sind im bzw. am an die Verlegestelle gelieferten Paneel, Brett od. dg1. von vornherein maschinell und daher wohldosiert aufgetragen. Ein Ausquellen überschüssigen Klebstoffes auf die Dekoroberfläche beim Aneinanderfügen der Paneele ist somit vermieden. Weiters ist die Gefahr eines - wie eben beschrieben - "vorzeitigen" Abbindens des Klebstoffes nicht gegeben. Was ganz allgemein verschiedene in Frage kommenden Klebstoffe betrifft, so sei dazu folgendes ausgeführt:
Als erstes seien hier die am häufigsten zum Einsatz kommenden Leime erwähnt. Leime sind Klebstoffe, die aus wasserlöslichen tierischen (Glutin, Casein), pflanzlichen (Stärke, Dextrin, Celluloseether) oder synthetischen (z.B. Polyacrylsäure-Derivate, Polyvinylalkohol, Polyvinylpyrrolidon) Polymeren und Wasser als Lösungsmittel bestehen. Sie gehören zu der Klasse der einkomponentigen, kalt abbindenden Klebstoffe, bei denen das Lösungsmittel (Wasser) während des Prozesses des Verklebens aufgesaugt wird, entweicht od. dgl.. Die aufgetragenen Leime erstarren beim Erkalten gallertartig und trocknen meist zu einer transparenten Masse ein. Diese löst sich beim Kontakt mit Wasser zu einem Gel mit hoher Klebkraft auf.

Speziell im Rahmen der Erfindung einsetzbare Leime seien nachstehend genannt. Es eignen sich sowohl vollsynthetische Leime, wie Kunstharzleime, z.B. Polyvinylacetat-Holzleim, als auch solche pflanzlicher Herkunft, wie Dextrin-, Stärke-, Sago- oder Tapioka-Leim, und tierischer Provenienz, wie Haut-, Leder-, Knochen- und Casein-Leime. Neben den bisher genannten physikalisch abbindenden Leimen lassen sich auch chemisch abbindende Leime einsetzen, wie z.B. solche auf Basis von Harnstoff-, Melamin-, Phenol- oder Kresolharzen.

Gemäß der Erfindung ist eine Belegung der Formschlußelemente, also der Nut und Feder der Paneele, mit einem klebe-latenten Belag vorgesehen, der durch entsprechende Aktivierung beim Verlegevorgang in den klebe-bereiten bzw. -fähigen Zustand übergeführt wird, sei dies nun durch eine einfache Überführung von einer Trocken- oder Dauerform eines ursprünglich schon fertig bereitet gewesenen Klebemittels durch Anfeuchten mit einem Lösemittel, insbesondere Wasser, oder aber durch eine Aktivierung eines klebe-latenten Stoffes durch einen das Abbinden und die Härtung desselben initiierenden Aktivatorstoffes.

Eine bevorzugte Unterform der eben beschriebenen Ausführungsform ist ein (Boden)-Belag mit Paneelen, deren Formschlußelemente mit einem wie eben beschriebenen aktivierbaren Kleber versehen sind, wobei gemäß diesem Anspruch ein ursprünglich mit Wasser bereitetes, sei dies nun ein damit bzw. darin gel-artig gelöstes oder darin dispergiertes Klebemittel, ein derartiger Leim od. dgl., im frischen "nassen" Zustand als Beschichtung aufgebracht und dann dort "getrocknet" ist. Durch Aufbringen von Wasser, sei dies nun direkt auf die eingetrocknete Kleber-Schicht oder durch einen indirekten intensiven Kontakt mit auf ein (Gegen-)Formschlußelement eines benachbarten und anzufügenden Paneels aufgebrachtem Wasser wird beim Aneinanderfügen der Paneele der "trockene" Kleber aktiviert und in den aktiv klebe-bereiten Zustand zurücküberführt. Das Auftragen des, bevorzugt wässerigen, Aktivators kann z.B. durch ein einfaches dosiertes Aufsprühen oder Auftragen desselben mittels Schwammgummi od. dgl. auf die jeweilige(n) Fläche(n) der Formschlußelemente der Paneele erfolgen

Eine zweite vorteilhafte Art der Aktivierung klebe-latenter Beschichtungen von Nuten und/oder Federn der Paneele für Beläge, insbesondere Bodenbeläge, durch polymer-chemische Vorgänge liegt darin, daß die Einzel-Komponenten eines Zweikomponenten-Kleber-Systems jeweils in einer Form in bzw. auf die Formschlußelemente ein- oder aufgebracht sind, in welcher sie bis zum Zeitpunkt der Aneinanderfügung der Paneele beim Verlegen der erfindungsgemäßen Beläge ihre Klebe-, Abbinde- und Erhärtungs-Eigenschaften nicht zur Geltung bringen. Erst beim FügeVorgang selbst kommt es zur Aktivierung der genannten Komponenten und zur Generierung des eigentlichen Klebers und schließlich zu dessen Abbinden und Erhärten unter Ausbildung einer mechanisch stabilen Klebeverbindung.

Es besteht damit eine vorteilhafte Variante der Erfindung darin, daß die beiden, zusammen letztlich das klebe-aktive Bindemittel bildenden Einzel-Komponenten in ihrer inerten Form in bzw. auf die Formschluß- und/oder Gegen-Formschlußeleniente, also in die Nuten und/oder auf die Federn der Paneele aufgebracht sind.

Eine andere Variante kann darin bestehen, daß nur eine der beiden Komponenten schon von der Paneel-Herstellung her eingebracht bzw. aufgetragen ist und die andere Komponente erst knapp vor Verlegung und Fügung der Paneele zum flächigen Belag vor Ort aufgetragen wird. Besonders bevorzugt ist eine derartige Klebemittelvorläufer-Beschichtung zumindest eines der Formschlußelemente mit einem sogenannten Härterlack, also mit einem anstrichmäßig aufgebrachten Film aus bzw. mit der Härter-Komponente eines Zwei-Komponentenklebers, während die Harzkomponente z.B. erst vor dem Verlegen auf den Härterlack oder auf ein beim Fügen mit dem Härterlack in Kontakt kommendes Formschlußelement aufgetragen werden kann.

Zu der Palette der erwähnten Klebstoffe ist folgendes ergänzend zu bemerken: Acrylat-Klebstoffe sind Klebstoffe auf Basis von Acryl-Monomeren, insbesondere von Acryl- und Methacrylsäureestern. Die Acrylat-Klebstoffe im engeren Sinn bestehen aus (Meth)-acryl-Monomeren, einem Polymer, das als Verdickungs- und Elastifizierungsmittel fungiert, und einem dessen Polymerisation auslösenden Initiator, vorzugsweise einem Redoxinitiator; sie werden als Zweikomponenten-Kleber in Kombination mit einem Aktivator eingesetzt. Anstelle von Methylmethacrylat werden heute bevorzugt weniger flüchtige und geruchsintensive (Meth-)acrylate, wie z.B. oligomere Polyurethandimethacrylate, verwendet, was insbesondere bei einem Auftragen dieser Harzkomponente vor dem Verlegen aus Gründen der Arbeitssicherheit günstig ist.

Klebstoffkomponenten der Acrylat-Klebstoffe können weiters auf Ethyl- und/oder Butylacrylat basierende Polymere sein, deren Eigenschaften, z.B. Härte und Elastizität, über die Mitverwendung geeigneter Comonomeren, z.B. Methacrylaten, bei der Polymerisation gezielt einstellbar sind und die zusätzliche funktionelle Gruppen, wie Carboxy-, Hydroxy-Gruppen, zur Verbesserung der Hafteigenschaften enthalten; sie sind z.B. als Lösungen oder Dispersionen auch als Haftklebstoffe breit einsetzbar. Mit AcrylatKlebstoffen hergestellte Klebverbunde zeichnen sich durch hohe Festigkeitswerte aus.

Gemäß einer an sich kostenaufwendigen und daher insbesondere für höherwertige Beläge in Frage kommenden Variante ist die Beschichtung bzw. Belegung der Formschlußelemente der Paneele der neuen (Boden-)Beläge mit einem in Mikrohohlkugeln od. dgl. verkapselten Klebemittel, einem derartigen Leim od. dgl. gebildet. Beim Zusammenfügen der Paneele, also beim Ineinanderschieben der Nuten und Federn, werden durch die Wirkung der dabei auftretenden Scher- und Druckkräfte die Hüllen der Mikrokapseln zerstört bzw. zerrissen und es wird der zuvor in den Kapseln befindliche, klebe-bereite Leim freigesetzt.

Bei der Mikroverkapselung des auf die Nut und/oder Feder der Paneele aufgebrachten Klebemittel-Belages ist eines der Formschlußelemente mit einer Beschichtung versehen, in welcher eine der beiden Komponenten des genannten Zweikomponenten-Kleber-Systems in mikroverkapselter Form enthalten ist Dessen (Gegen-)Formschlußelemente am jeweils anzufügenden Paneel ist mit der jeweils anderen, eventuell ebenfalls mikroverkapselten, Komponente des genannten Kleber-Systems beschichtet.

Beim Fügen der Paneele reißen die Hüllen der Mikrokapseln auf und es gelangen Harz- und Härter-Komponente zueinander, womit der Klebstoff in die fertige Form übergeht, die Klebung eingeleitet wird und es zu deren Abbinden und Erhärten kommt.

Weiters ist eine Beschichtung mit einem Zweikomponenten-Kleber-System auf Basis von Mikrokapseln vorgesehen, bei der sich nur eine, z.B. die empfindlichere, Komponente in den Mikrokapseln befindet, während die andere, günstigerweise die weniger empfindliche, Komponente des Systems jeweils eine Matrix für die Mikrokapseln der erstgenannten Komponente bildet.

Schließlich sind noch zwei, insbesondere für stark beanspruchte Bodenbeläge besonders vorteilhafte, feste Paneel-Verbindungen gewährleistende, handelsübliche Haftschmelz-Klebemittel zu nennen. Der Haftschmelz-Klebstoff "Dorus PS 534/5" ist ein niedrigviskoser Haftschmelz-Klebstoff mit verhältnismäßig hohem Erweichungspunkt und für diese Klebstoffart durchaus guten Scherfestigkeitswerten. Für die Verarbeitung in Schmelzklebstoff-Handpistolen und kleinen Auftragsgeräten kann dieser Klebstoff speziell stabilisiert sein, um Vercrackungserscheinungen bei geringem Verbrauch und hoher Verarbeitungstemperatur vorzubeugen. Die empfohlene Verarbeitungs- und Auftrags-Temperatur beträgt zwischen 140 und 170°C. Für die konkrete Verleimung der Paneele auf Holzwerkstoff-Laminatbasis hat sich eine Auftragstemperatur im Bereich von etwa 150°C bewährt. Die Lagerfähigkeit der damit herstellbaren Nut- und/oder Feder-Klebebeschichtung beträgt bei normaler und trockener Lagerung mindestens ein Jahr.

Die Viskosität des weiteren Haftschmelz-Klebstoffes "Dorus PS 576/6" liegt unterhalb der Viskosität des vorgenannten Klebstoffes Dorus 534/5. Er besitzt eine hohe freie Klebrigkeit. Der Erweichungspunkt liegt ähnlich hoch wie beim Dorus PS 534/5. Die Verarbeitungstemperatur und Lagerfähigkeit sind ebenfalls im wesentlichen analog zum Haftschmelz-Klebstoff Dorus PS 534/5. Die Lagerfähigkeit der mit Dorus PS 576/6 hergestellten Latenz-Klebeschicht betrügt ebenfalls zumindest ein Jahr. Wie schon oben kurz erwähnt, besteht das Problem bei schon von der Fertigung her mit Klebe-Schichten versehenen Paneelen für Beläge verschiedenster Art darin, den Kleber dort in einer Form abzulegen, aufzubringen od. dgl., in welcher er sich, nachdem er zubereitet ist, über längere Zeiträume hinweg nicht von selbst verändert oder durch externe Einflüsse verändert wird. Der Klebstoff soll jedoch beim Aneinanderfügen der Paneele zu den Belägen, und insbesondere Bodenbelägen, sofort in den klebe-bereiten Zustand Übergegangen sein.

Größere Versuchsreihen haben gezeigt, daß klebe-bereite Kleber, Leime od. dgl. für Belags-Paneele nicht in mikroverkapselter Form, wie schon oben näher beschrieben, vorliegen müssen, sondern daß sie - praktisch etwa "makro-verkapselt" - in Form eines in bzw. auf die Formschlußelemente der Paneele ein- bzw. aufgebrachten bzw. dort abgelegten, etwa schlauchartigen, Integral-Stranges vorliegen können.

Bei einer auf diesem Prinzip der Ausstattung mit Klebstoff beruhende, besonders bevorzugte Ausführungsform der erfindungemäßen verlege- und verklebe-fertigen Belags-Paneele beruhenden Variante ist der abgelegte Klebstoff im selbst klebe-bereiten Zustand als Kernstrang in einer ihn dichtend umschließenden Endlos-Schlauchhülle eingeschlossen, wobei diese Hülle beim Ein- oder Auftragen einerseits gleich in der jeweiligen Nut bzw. auf der Feder der Paneele bzw. auf einer ihrer Flächen bzw. Flanken festklebt.

Der genannte Klebstoff-Hüllschlauch hält äußere Einflüsse von der von ihm umhüllten Klebe-Substanz des Kernstranges fern und verhindert so eine Veränderung desselben. Gleichzeitig ist der Hüllschlauch mechanisch jedoch so empfindlich, daß er beim Fügen der Paneele zerreißt und den klebe-bereiten, durch ihn frisch gehaltenen Klebstoff freigibt, der dann abbinden und aushärten kann. Die Fragmente der zerrissenen Hülle sind derart dünn, daß sie die weiter oben angesprochene, exakte "Fugenlos"-Fügung der Paneele mit extrem schmalen, kaum sichtbaren Stößen bzw. Fugen nicht behindern.

Mit Hilfe des wie eben beschriebenen Klebstoff Hüllen/Kern-Endlosstranges und dessen exakter Dimensionierung kann der Klebstoff, jeweils an die geometrischen Verhältnisse und Toleranzen der jeweiligen Nut- und Feder-Verbindung angepaßt, in seiner Menge pro Längeneinheit des jeweiligen Formschlußelementes genau dosiert vorliegen. Damit ist eine hohe Gleichmäßigkeit des Klebstoff-Auftrags gesichert und es ist ein, wie oben beschriebenes, unangenehmes Ausquellen überschüssigen Klebers und dessen Folgen mit Sicherheit verhindert.

Geeignete Polymere bzw. Klebstoffe für die Hüllen der neuartigen Klebstoffstränge binden nach erfolgter Extrusion vorteilhafterweise schnell ab, was ein Austreten des Kem-Klebstoffes während des Ein- bzw. Auftragens des Integral-Klebstoffstranges verhindert. Dafür geeignete Polymere sollen mit dem Kern-Klebstoff verträglich sein, also z.B. einem Holzleim als Kern kein bzw. nur wenig Wasser entziehen, und sie dürfen nach dem Auftragsvorgang praktisch keine Diffusion des Wassers aus dem Kern-Klebstoff nach außen hin mehr zulassen.

Die für hochbelastbare Bodenbeläge besonders geeigneten "Butylklebstoffe" sind, wie sich zeigte, imstande, den Kern-Klebstoff über längere Zeiträume, wie z.B. über mehrere Wochen bzw. Monate, hinweg vor einem "Austrocknen" schützen. Es kommen aber für den Hüllenstrang auch Klebstoffe auf Basis von Polyurethan-Kautschuken in Frage.

Eine bevorzugte Form des Querschnittes des Hüllen/Kem-Klebstoffstranges in der Nut und/oder auf der Feder der Paneele der neuen verlege- und verklebe-fertigen Bodenbeläge ist in Fig. 5 wiedergegeben. Ein gleichmäßig dicker Beschichtungsfilm mit dem Klebstoff, wie er bei verschiedenen anderen, bisher erörterten Ausführungsformen der Erfindung vornehmlich vorgesehen ist, ist hier nicht gegeben.

An die Polymeren bzw. Klebstoffe für den beschriebenen Co-Extrudat-Strang ist selbstverständlich die Forderung gestellt, daß die dessen Hülle bildende Haut diffusionsdicht ist. Sollte die Schutzhülle durch Bläschen, Verunreinigungen oder Verletzungen gestört sein, würde die Gefahr einer lokalen Aushärtung des Leimes des Kernstranges bestehen. Dadurch würde sich die gesamte Nut-Feder-Geometrie nicht mehr ordentlich, also praktisch "fugenlos", zusammenfügen lassen.

Was die Regulierung der Hautdicke des Hüllstranges betrifft, ist festzustellen, daß das Hüllstrangmaterial selbst kein Hindernis für das angestrebte "fugenfreie" Fügen und Verpressen der Paneele darstellen darf. Es muß fähig sein, beim Fügen für den Kern-Klebstoff den Weg zum Holz bzw. Holzwerkstoff freizugeben, und es darf keine größeren Flächen zwischen Holz und Leim beanspruchen. Gegebenenfalls könnten Geometrieänderungen in der Nut in diesem Sinne unterstützend wirken.

Bezüglich der Viskosität der Materialien von Hüllen- und Kernstrang ist festzuhalten, daß das notwendigerweise gleichzeitige, gleichmäßige Extrudieren von Hüllen- und Kern-Polymer in konstanten gewünschten Mengenverhältnissen zueinander mit möglichst geringem technischem Aufwand realisierbar sein soll. Zu hohe Viskositäten führen zu relativ hohen Förderdrucken, zu geringe Viskositäten würden sowohl die Transportstabilität als auch die Hüllhaut- und die Kernstrang- bzw. die Gesamt-Strangraupen-Bildung beim Co-Extrudieren negativ beeinflussen. Eine echte Angleichung der Viskositäten beider Substrate aneinander während des Auftragvorganges hat sich nicht als notwendig erwiesen.

Was den Förderdruck betrifft, ist hiezu zu bemerken, daß handelsübliche ButylKautschuke oder feuchtigkeitsvemetzende Polyurethane üblicherweise hohe Viskositäten aufweisen, sodaß sich für die Co-Extrusion der Klebstoffe Förderdrücke von bis zu 20 bar, als günstig erwiesen hat. Bezüglich der Temperaturunterschiede zwischen Kern- und Hüllstrang-Polymermaterial beim Ausbringen des Integral-Klebstoffstranges ist es günstig, wenn im Dosiersystem gegebenenfalls jede der beiden Komponenten für Hülle und Kern bis hin zur Co-Extrusionsdüse beheizbar sind. Günstig ist es weiters, wenn die beiden Klebstoff-Polymere bei annähernd gleichen Temperaturen extrudiert werden können. Bei zu großen Temperaturunterschieden zwischen Kern- und dem Hüllstrang beim Integralstrang-Auf bzw. -Eintrag wären gesonderte Vorkehrungen für thermische Isolierungen und für getrennte Heizungen nötig.

Zu den Abmessungen bzw. Dimensionierungen des Klebstoff-Stranges ist beispielsweise konkret auszuführen, daß bei Laminatpaneelen mit Nutbreiten von etwa 3 nun der Klebstoff-Raupen- bzw. -Strang-Durchmesser innerhalb dieser Dimension angesiedelt sein muß. Die Herstellung von Kern-Hüllen-Klebstoffsträngen mit Durchmessern von minimal 1,5 mm und Stranghüllen-Dicken von minimal 0,15 mm hat sich als relativ kostengünstig und technologisch problemlos beherrschbar erwiesen.

Besonders einfach sind Nut- und Feder-Klick-Systeme einer dritten Art, bei welchen nur eine hinterschnittene, beim Fügen durch das Eindringen einer randverdickten Feder des Nachbar-Paneels auseinander drängbare Nut vorgesehen ist, welche sich beim Einschnappen der Federverdickung in die Hinterschneidungszone der Nut wieder schließt, womit eine mechanische Verklinkung bzw. Verhakung erfolgt. Es hat sich nun im Rahmen umfangreicher Untersuchungen gezeigt, daß es bei diesen selbstzusammenhaltenden Einschnapp-System-Paneelen besonders günstig ist, den Zusammenhalt der Paneele zusätzlich durch Leimaufträge zu steigern. Es ist, siehe eingangs, verständlich, daß bei, mit - mit seitlichen Schnapp-Formschlußelementen ausgestatteten - Paneelen zu verlegenden Belägen dem Verleger ein Vor-Ort-Leimauftrag auf die Formschlußelemente nicht zugemutet werden kann. Es ist also für diese anspruchsvollen und entsprechend teuren Paneel-Systeme die vorliegende Erfindung mit dem schon im Rahmen der Paneel-Erzeugung selbst erfolgenden Leim- bzw. Klebemittelauftrag besonders wertvoll.

Was die Aufbringung des Klebstoffes in bzw. auf die Klick-Fonnschlußelemente betrifft, kommen alle Klebstoff-Aufbringungs-Methoden in Frage, wie Streichen, Aufwalzen, Dünnschichtgießen od. dgl., wobei darauf zu achten ist, daß der aufgebrachte Klebstofffilm einerseits der Scherbeanspruchung beim Ineinanderschieben der Schnapp-Formschlußelemente gewachsen ist und seine Haftung auf dem Paneelsubstrat nicht verloren geht, andererseits aber in einer gleichmäßigen Schichtdicke im Bereich von bloß 0,3, besser noch von 0,2 mm abwärts vorliegt, da somit der Klebstoff stellenweise zu viel Eigenvolumen und somit Platzbedarf aufweist und der Formschluß und insbesondere ein ordnungsgemäßes Verklinken von Nut und Feder nicht mehr möglich ist.

Nicht nur für die soeben erläuterten Klick-Nut- und Feder-Paneele, sondern auch für Paneele mit jeder anderen Art von Formschluß-Elementen ist es daher besonders bevorzugt, den Klebstoffauftrag durch Aufsprühen eines geschmolzenen Haft-Schmelzklebstoffes in bzw. auf die Nut und/oder die Feder aufzubringen. Sprüh-Auftragsdicken im Bereich von maximal 0,25 mm haben sich bei einseitigem Auftrag, also bei Auftrag entweder nur in die Nuten oder aber nur auf die Federn bewährt. Bei beidseitigem Auftrag auf Nut- und Federflächen muß die Filmdicke entsprechend reduziert werden, da sonst der Formschluß nicht mehr ohne Gewaltanwendung erreichbar ist.

Bei Belägen aus Paneelen mit Einschnapp-Formschluß konnte durch Klebstoffauftrag eine Steigerung des Aneinanderhalts der Paneele im Bereich von bis zum Doppelten erzielt werden. Der typische Wert lag bei etwa+70%.

Wie schon eingangs erwähnt, besteht ein weiterer wesentlicher Gegenstand der vorliegenden Erfindung in den - für die Bildung der bisher beschriebenen Beläge, Verkleidungen od. dgl., und insbesondere Bodenbeläge - formschluß-kooperierend verlegbaren und verklebe-fertigen Paneelen, Platten, Brettern, Latten, Riemchen od. dgl. Dieselben sind in genau jener Art mit dem (den) Klebemittel(n) ausgerüstet, wie dies für die aus ihnen gebildeten Beläge bis hierher schon eingehend und in den verschiedenen bevorzugten Varianten Näher beschrieben ist.

## Patentansprüche

1. System aus flächigen Bauteilen (1, 2) relativ geringer Dicke, die entlang ihrer umlaufenden Schmalseiten miteinander verbunden werden können, wobei an den zu verbindenden Flächen nach dem Nut-Feder-Prinzip zusammenwirkende Verbindungsorgane (5, 6) vorgesehen sind, und wobei an der Nut-Feder-Verbindung Rastorgane (7, 8) für ein gegenseitiges vorgespanntes Fixieren aneinanderliegender Bauteile vorgesehen sind, **dadurch gekennzeichnet, dass** ein aktivierbarer Klebstoff (20) und ein zugehöriger Aktivator an jenen Nut- (9) sowie Federflächen (11) vorgesehen ist, welche durch das selbsttätige Hineinziehen der Feder in die Nut aneinandergepresst werden und in dieser Lage durch die Rastverbindung fixiert sind, und zwar ist der Klebstoff (20) und der zugehörige Aktivator wenigstens in dem Bereich dieser Nut- (9) und Federflächen (11) vorgesehen, der dem jeweils anderen Bauelement zugewandt ist, wobei diese Nutflächen (9) mit dem aktivierbaren Klebstoff (20) und diese Federflächen (11) mit dem zugehörigen Aktivator versehen sind oder umgekehrt.

2. System nach Anspruch 1 bei dem die Nutwangen (9) vom Nutboden (10) weg divergieren und im Bereich des nutgrundfernen Teils der Nut (5) unter einem größeren Winkel als der Winkel der Divergierung konvergieren, wobei die Mündungsbreite der Nut (5) größer ist als der in Einschubrichtung vorderste Bereich der Feder, welche von diesem vordersten Bereich ausgehend unter dem gleichen Winkel wie die Nutwangen (9) divergierende Keilflächen (11) aufweist, die in Übereinstimmung mit dem Nutquerschnitt in dem in Einschubrichtung der Feder (6) hinteren Bereich derselben eine Hinterschneidung aufweist, deren an die Keilflächen (11) anschließenden Begrenzungsflächen (17) unter dem gleichen Winkel wie die Nutwangen (9) zu einem am Bauteil anschließenden Verbindungssteg konvergieren, **dadurch gekennzeichnet, daß** die Nut (5) im Bereich ihrer divergierenden Flanken mit dem aktivierbaren Klebstoff (20) und die Feder (6) im Bereich ihrer divergierenden Keilfläche (11) mit dem entsprechenden Aktivator versehen sind, oder umgekehrt.

3. System nach Anspruch 1 oder 2, wobei auf der unteren und/ oder oberen Seite der Nut (5) und auf der entsprechenden oberen und/ oder unteren Seite der Feder (6), vorzugsweise über die gesamte Länge der Nut und der Feder erstreckende, aneinander angepaßte Verriegelungselemente (7, 8) in form einer Vertiefung oder Ausnehmung oder in Form eines Vorsprunges (7) ausgebildet sind, um verbundene Bauteile (1, 2) in zusammengefügter Lage zu halten und wobei zur festen Verbindung der Bauteile die Nut (5) direkt im Bauteil selbst ausgebildet bzw. aus diesem herausgearbeitet ist, die insbesondere massiv ausgebildete Feder (6) mit dem Bauteil einstückig bzw. aus diesem herausgearbeitet ist, die Breite der Nut von innen nach außen zu zunimmt die Dicke der Feder in Richtung auf ihr freies Ende hin abnimmt, der Vorsprung (7) auf der Feder eine kürzere hintere Fläche aufweist, die Vertiefung (8) in der Nut eine kürzere, nutgrundferne und in Verriegelungsstellung an die kürzere hintere Fläche des Vorsprunges anliegende Anlagefläche aufweist, zumindest einer der beiden, vorzugsweise beide, Nutwangen (9) relativ zum jeweils anderen Nutwangen elastisch nach außen hin abbiegbar ist, sodaß die Feder (6) von den Nutwangen (9) unter Klemmwirkung in Raststellung gehalten ist bzw. unter elastischer Abbiegung der Nutwangen (9) in die Nut (5) eingeführt werden kann, und der Winkel zwischen den beiden Dreieckseiten oder zwischen der längeren vorderen Federfläche (18) und der kürzeren hinteren Fläch**e** (17) 100° bis 140°, insbesondere 110° bis 130°, beträgt, wobei die zwei Schenkel der Nut gleich lang sind, wobei die Vertiefung (8) in der Nut eine in Verriegelungsstellung zumindest teilweise an die längere vordere Fläche (18) anliegende, nutgrundnahe Anlagefläche aufweist, wobei die nutgrundnahe Dreieckseite (18) etwa vier- bis achtmal, vorzugsweise fünf bis siebenmal, so lang ist wie die nutgrundferne Dreieckseite (17) und wobei wenigstens an der nutgrundnahen Anlagefläche der Nutwandungen (9) der aktivierbare Klebstoff (20) und an der längeren vorderen Fläche der Feder (11) der entsprechende Aktivator vorgesehen ist, oder umgekehrt.

4. System nach einem der Ansprüche 1 bis 3, **dadurch gekennzeichnet, dass** Paneele als Bauteile (1, 2) vorgesehen sind und die Nuten (5) der einzelnen Paneele, insbesondere zumindest eine von deren Nut-Flankenflächen (9) mit einer Füllung, Beschichtung, einem Belag, Strang od. dgl. aus einem klebe-latenten nach entsprechender Aktivierung klebebereiten- Klebematerial (20) und die Federn (6), insbesondere zumindest eine von deren Feder-Flackenflächen (11), mit einer bevorzugterweise dieselben benetzenden Beschichtung bzw. Oberflächen-Imprägmerung, einem Belag, Strang od. dgl. aus einem klebungs-induzierenden KlebeAktivator versehen sind.

5. System nach einem der Ansprüche 1 bis 4, **dadurch gekennzeichnet, dass** Paneele als Bauteile (1, 2) vorgesehen sind und die Nuten (5) der Paneele, insbesondere zumindest eine von deren Flankenflächen (9), mit mit einer Füllung, insbesondere Beschichtung, aus einem durch Lösungs- bzw. Dispersionsmittel-Entzug, bevorzugt Wasserentzug, stabilisierten, jedoch bei Kontakt mit einem Lösungsmittel, insbesondere mittels Wasser, bzw. Wasserfeuchte, (re-)aktivierbaren Kleber bzw. Leim (20) versehen sind, und daß die Federn (6) der Paneele, insbesondere zumindest eine von deren Flankenflächen (11), mit einem die genannten Federn bedeckenden bzw. zumindest benetzenden Film oder Belag bzw. einer derartigen Oberflächen-Imprägnierung aus einem Lösungs- oder Dispersionsmittel für den Kleber bzw. Leim, insbesondere Wasser, als Klebeaktivator versehen sind.

6. System noch einem der Ansprüche 1 bis 5, **dadurch gekennzeichnet, dass** Paneele als Bauteile (1, 2) vorgesehen sind und die Nuten (5) der Paneele, insbesondere zumindest eine von deren Flankenflächen (9) mit einer Füllung, insbesondere Beschichtung, aus einem durch Wasserentzug stabilisierten, jedoch bei Kontakt mit Wasser bzw. Wasserfeuchte (re-)aktivierbaren Dispersions-Klebstoff (20), insbesondere aus einem Schnellbinder- und Montageleim auf Polyvinylacetat-Basis, wie beispielsweise aus handelsüblichen Holzleim, z.B. auf Stärke- und/oder Protein-Basis, versehen sind.

7. System nach einem der Ansprüche 1 bis 6, **dadurch gekennzeichnet, dass** Paneele als Bauteile (1, 2) vorgesehen sind und die Nuten (5) der Paneele, insbesondere zumindest eine von deren Flankenflächen (9), mit einer ersten Komponente, insbesondere mit der nicht oder nicht voll ausgehärteten Harz-Komponente, eines Zweikomponenten-Polymerisationsklebers, und die Federn insbesondere zumindest eine von deren Flank-enflächen, mit der zweiten Komponente, insbesondere mit der Härter-Komponente, des genannten Zweikomponenten-Klebers, oder aber vice versa, beschichtet sind.

8. System nach einem der Ansprüche 1 bis 7, **dadurch gekennzeichnet, dass** Paneele als Bauteile (1, 2) vorgesehen sind und die Nuten (5) oder die Federn (6) der Paneele, insbesondere zumindest eine von deren Flankenflächen (9, 11), mit einer zweiten Komponente, insbesondere mit der Härter-Komponente, eines Zweikomponenten-Polymerisationsklebers, vorzugsweise in Form eines Härterlacks, und einer, auf die Härter-Komponente, insbesondere auf den Härterlack, aufgebrachten ersten Komponente, insbesondere der Harz-Komponente, beschichtet sind.

9. System nach Anspruch 7 oder 8, **dadurch gekennzeichnet, daß** die Härter-Komponente des Zweikomponenten-Klebers, insbesondere der Härterlack, auf Basis eines organischen Peroxides und die mit demselben auszuhärtende Harz-Komponente auf Methacrylat-Basis aufgebaut sind.

10. System nach Anspruch 7 oder 8, **dadurch gekennzeichnet, daß** die Härter-Komponente des Zweikomponenten-Klebers, insbesondere der Härterlack, auf Basis eines aliphatischen oder cycloaliphatischen Polyamins und dessen Harz-Komponente auf Basis eines Epoxid- und/oder Bisphenol-A- und/oder -F-Harzes aufgebaut sind.

11. System noch einem der Ansprüche 1 bis 10, bei dem Paneele als Bauteile vorgesehen sind, **dadurch gekennzeichnet, daß** zumindest eine der Nut-Flankenflächen (9) der Paneele mit einer Beschichtung bzw. mit einem Strang aus der mikroverkapselten Harz-Komponente eines Zwei-Komponentenklebers und zumindest eine, mit der soeben genannten jeweils beschichteten Nut-Flankenfläche (9) fügungs-kooperierende- Feder-Flankenfläche (11) mit einer Beschichtung bzw. mit einem Film oder einem Strang aus der ebenfalls mikroverkapselten- Härter-Komponente des genannten Zwei-Komponentenklebers, oder aber vice versa, versehen ist bzw. sind.

12. System nach einem der Ansprüche 1 bis 11, bei dem Paneele als Bauteile vorgesehen sind, **dadurch gekennzeichnet, daß** die Beschichtung der Nuten der Paneele, insbesondere von zumindest einer von deren Flankenflächen (9), mit dem durch Wasserentzug stabilisierten, jedoch bei Kontakt mit Wasser bzw. Wasserfeuchte (re-)aktivierbaren Klebstoff, eine im wesentlichen gleichmäßige Schichtdicke im Bereich von 0,1 bis 0,4, insbesondere von 0.15 bis 0,25 mm, bei DickenToleranzen im Bereich von ±0,05 mm aufweist.

## Claims

1. System of planar parts (1 , 2) of relatively small thickness that can be connected with each other along their peripheral narrow sides, wherein connecting means (5, 6) cooperating in accordance with the groove-and-tongue-principle are provided on the surfaces to be connected, and wherein engaging means (7, 8) are provided at the groove-and-tongue-connection for a mutual biased fixing of adjacent parts, **characterized in that** an activatable adhesive (20) and an associated activator are provided at said groove (9) and tongue surfaces (11), which are pressed together by the tongue being automatically drawn into the groove, and which are fixed in this position by the engaging connection, the adhesive (20) and the associated activator being provided at least in the area of these groove (9) and tongue surfaces (11) which faces the respective other constructional element, these groove surfaces (9) being provided with the activatable adhesive (20) and these tongue surfaces (11) being provided with the associated activator, or vice versa.

2. System according to Claim 1, wherein the groove cheeks (9) diverge away from the groove bottom (1 0) and converge in the area of the part of the groove (5) distant from the groove bottom under an angle larger than the angle of the divergence, wherein the width of the mouth of the groove (5) is larger than the area of the tongue foremost in the direction of insertion, which, starting at this foremost area, has wedge surfaces (11) diverging under the same angle as the groove cheeks (9) and having, corresponding to the cross section of the groove, in the rear area of the tongue (6), with respect to the direction of its insertion, an undercut, whose boundary surfaces (1 7) adjacent to the wedge surfaces (11) converge under the same angle as the groove cheeks (9) towards a connecting web adjacent to the part, **characterized in that** the groove (5) is provided in the area of its diverging flanks with the activatable adhesive (20) and the tongue (6) is provided in the area of its diverging wedge surface (11) with the corresponding activator, or vice versa.

3. System according to Claim 1 or 2, wherein mutually adapted locking means (7, 8) are formed, on the lower and/or upper side of the groove (5) and on the corresponding lower and/or upper side of the tongue (6), preferably extending over the entire length of the groove and the tongue, in the shape of a depression or a recess or in the shape of a projection (7), in order to retain connected parts (1 , 2) in a joined position, and wherein the groove (5) is formed directly in the part itself or is worked out of it for a firm connection of the parts, wherein the tongue (6), which is, in particular, formed massively, is integral with the part or is worked out of it, wherein the width of the groove increases from the inside towards the outside, wherein the thickness of the tongue decreases in the direction towards its free end, wherein the projection (7) on the tongue has a shorter rear surface, wherein the depression (8) in the groove has a contact surface that is shorter, distant from the bottom of the groove and adjacent to the shorter rear surface of the projection in the locking position, wherein at least one of the two, preferably both, groove cheeks (9) is elastically bendable towards the outside relative to the respective other groove cheek, so that the tongue (6) is held in the engaged position by a clamping effect of the groove cheeks or can be inserted into the groove while the groove cheeks (9) are elastically bent, and wherein the angle between the two sides of the triangle or between the longer front surface (18) of the tongue and the shorter rear surface (1 7) is 100 to 140 degrees, in particular 110 to 1 30 degrees, the two sides of the groove being of equal length, wherein the depression (8) in the groove, in the locking position, has a contact surface at least in part adjacent to the longer front surface (18) and close to the bottom of the groove, wherein the side (18) of the triangle close to the bottom of the groove is about four to eight times, preferably five to seven times as long as the side (18) of the triangle distant from the bottom of the groove, and wherein the activatable adhesive (20) is provided at least on the contact surface of the groove walls (9) close to the bottom of the groove and the corresponding activator is provided at the longer front surface of the tongue (11), or vice versa.

4. System according to one of the Claims 1 to 3, **characterized in that** panels are provided as parts (1 , 2) and that the grooves (5) of the individual panels, in particular at least one of their groove flank surfaces (9), are provided with a filling, coating, a cover, a line or the like of a latent-adhesive adhesive material (20) that is ready for adhesion after being activated accordingly, and the tongues (6), in particular at least one of its flank surfaces (11), are provided with a coating or surface impregnation, a cover, a line or the like preferably wetting the same from an adhesion-inducing adhesive activator.

5. System according to one of the Claims 1 to 4, **characterized in that** panels are provided as parts (1 , 2) and that the groove (5) of the panels, in particular at least one of their flank surfaces (9), are provided with a filling, in particular coating, of an adhesive or glue (20) that is stabilized by withdrawal of solvents or dispersion agents, in particular by withdrawal of water, but that is (re-)activatable by contact with a solvent, in particular by water or water moisture, and that the that the tongues (6) of the panels, in particular at least one of their flank surfaces (11), are provided with a film or cover covering or at least wetting said tongues, or such a surface impregnation of a solvent or dispersion agent for the adhesive or glue, in particular water, as adhesive activator.

6. System according to one of the claims 1 to 5, **characterized in that** panels are provided as parts (1, 2) and that the grooves (5) of the panels, in particular one of their flank surfaces (9), are provided with a filling, in particular coating, of a dispersion adhesive (20) stabilized by withdrawal of water but (re-)activatable by contact with water or water moisture, in particular of a rapid-hardening and assembly glue based on polyvinyl acetate, such as, e.g., of commercially available wood-working glue, e.g. based on starch and/or proteins.

7. System according to one of the Claims 1 to 6. **characterized in that** panels are provided as parts (1 , 2), and that the grooves (5) of the panels, in particular at least one of their flank surfaces (9), are coated with a first component, in particular with the resin component that has not hardened or not hardened fully, of a two-component polymerization adhesive, and that the tongues, in particular at least one of their flank surfaces, are coated with the second component, in particular with the hardener component, of said two-component adhesive, or vice versa.

8. System according to one of the Claims 1 to 7, **characterized in that** panels are provided as parts (1 , 2), and that the grooves (5) or the tongues (6) of the panels, in particular at least one of their flank surfaces (9, 11) are coated with a second component, in particular with the hardener component, of said two-component adhesive, preferably in the form of a hardener lacquer, and with a first component, in particular the resin component, applied to the hardener component, in particular the hardener lacquer.

9. System according to Claim 7 or 8, **characterized in that** the hardener component of the two-component adhesive, in particular the hardener lacquer, is based on an organic peroxide, and the resin component to be hardened therewith is based on methacrylate.

10. System according to Claims 7 or 8, **characterized in that** the hardener component of the two-component adhesive, in particular the hardener lacquer, is based on an aliphatic or cycloaliphatic polyamin, and its resin component is based on an expoxy and/or bisphenol A and/or F resin.

11. System according to one of the Claims 1 to 10, wherein panels are provided as parts, **characterized in that** at least one of the groove flank surfaces (9) of the panels is provided with a coating or a line of the micro-encapsuled resin component of a two-component adhesive, and that at least one tongue flank surface (11), which cooperates to be joined with said coated groove flank surface (9), is provided with a coating or with a film or a line of the hardener component, which is also micro-encapsuled, of said two component adhesive, or vice versa.

12. System according to one of the Claims 1 to 1 1 , wherein panels are provided as parts, **characterized in that** the coating of the grooves (5) of the panels, in particular of at least one of their flank surfaces (9), with the adhesive which is stabilized by the withdrawal of water but which can be (re-)activated by the contact with water or water moisture, has a substantially uniform layer thickness in the range of 0.1 to 0.4, in particular of 0.15 to 0.25 mm, with thickness tolerances in the range of ± 0.05 mm.

## Revendications

1. Système formé de composants plans (1, 2) d'épaisseur relativement faible, qui peuvent être assemblés l'un avec l'autre le long de leurs côtés étroits périphériques, dans lequel des organes d'assemblage (5, 6) coopérant selon le principe d'assemblage à rainure et languette sont prévus sur les surfaces à assembler, et dans lequel, sur l'assemblage à rainure et languette, il est prévu des organes d'encliquetage (7, 8) pour une fixation mutuelle précontrainte de composants appliqués l'un sur l'autre, **caractérisé en ce qu'**il est prévu un adhésif activable (20) et un activateur correspondant sur les surfaces de rainure (9) et de languette (11), qui sont pressées l'une sur l'autre en faisant rentrer automatiquement la languette dans la rainure et qui sont fixées dans cette position par l'assemblage par encliquetage, c'est-à-dire que l'adhésif (20) et l'activateur correspondant sont prévus au moins dans la zone des surfaces de rainure (9) et de languette (11), qui est tournée vers l'autre composant respectif, ces surfaces de rainure (9) étant pourvues de l'adhésif activable (20) et ces surfaces de languette (11) étant pourvues de l'activateur correspondant, ou inversement.

2. Système selon la revendication 1, dans lequel les faces (9) de la rainure divergent en s'écartant du fond (10) de la rainure et convergent dans la zone de la partie de la rainure (5) éloignée du fond de celle-ci d'un angle plus grand que l'angle de divergence, la largeur d'ouverture de la rainure (5) étant plus grande que la zone de la languette la plus en avant dans le sens d'insertion, laquelle languette présente des surfaces en coin (11) divergeant, à partir de cette zone la plus en avant, du même angle que les faces (9) de la rainure et qui présente, en coïncidence avec la section transversale de la rainure, dans la zone arrière de la languette (6) dans le sens d'insertion de cette dernière, dont les surfaces de délimitation (17) reliées aux surfaces en coin (11) convergent du même angle que les faces (9) de la rainure en une âme d'assemblage reliée au composant, **caractérisé en ce que** la rainure (5) est pourvue, dans la zone de ses flancs divergents, de l'adhésif activable (20) et la languette (6) est pourvue, dans la zone de ses surfaces en coin divergentes (11), de l'activateur correspondant, ou inversement.

3. Système selon la revendication 1 ou 2, dans lequel des éléments de verrouillage (7, 8) adaptés l'un à l'autre et s'étendant sur le côté inférieur et/ou supérieur de la rainure (5) et sur le côté supérieur et/ou inférieur correspondant de la languette (6), de préférence sur toute la longueur de la rainure et de la languette, se présentent sous la forme d'un creux ou d'un évidement ou sous la forme d'une saillie (7), pour maintenir des composants assemblés (1, 2) en position accouplée, et dans lequel la rainure (5) est formée, pour l'assemblage fixe des composants, directement dans le composant lui-même ou façonnée à partir de celui-ci, la languette (6) réalisée de manière particulièrement massive est façonnée d'une seule pièce avec le composant ou à partir de celui-ci, la largeur de la rainure augmente de l'intérieur vers l'extérieur, l'épaisseur de la languette décroît en direction de son extrémité libre, la saillie (7) sur la languette présente une surface arrière plus courte, le creux (8) dans la rainure présente une surface d'appui plus courte, éloignée du fond de la rainure et attenante à la surface arrière plus courte de la saillie en position de verrouillage, au moins une des deux, de préférence les deux faces (9) de la rainure peut être repliée de manière élastique vers l'extérieur par rapport à l'autre face de rainure respective, de manière à maintenir la languette (6) en position d'encliquetage par une action de serrage via les faces (9) de la rainure ou de manière à pouvoir l'introduire par écartement élastique des faces (9) de la rainure dans la rainure (5), et l'angle entre les deux côtés triangulaires ou entre la surface de languette avant plus longue (18) et la surface arrière plus courte (17) est de 100 à 140 °, en particulier de 110 à 130 °, dans lequel les deux ailes de la rainure sont de même longueur, le creux (8) dans la rainure présente une surface d'appui proche du fond de la rainure et attenante, en position de verrouillage, au moins en partie, aux surfaces avant plus longues (18), le côté triangulaire (18) proche du fond de la rainure est environ quatre à huit fois, de préférence cinq à sept fois aussi long que le côté triangulaire (17) éloigné du fond de la rainure et l'adhésif activable (20) est prévu au moins sur la surface d'appui proche du fond de la rainure des parois (9) de la rainure et l'activateur correspondant est prévu sur la surface avant plus longue de la languette (11), ou inversement.

4. Système selon l'une quelconque des revendications 1 à 3, **caractérisé en ce que** des panneaux sont prévus comme composants (1, 2) et **en ce que** les rainures (5) des panneaux individuels, en particulier au moins une de leurs surfaces de flancs de rainure (9), sont pourvues d'un remplissage, d'un revêtement, d'une garniture, d'un boudin ou similaire constitué(e) d'un matériau adhésif (20) à adhérence latente prêt à l'emploi après activation correspondante et les languettes (6), en particulier au moins l'une de leurs surfaces de flancs de languette (11), sont pourvues d'un revêtement mouillant de préférence ceux-ci ou d'une imprégnation de surface, d'une garniture, d'un boudin ou similaire, constitué d'un activateur d'adhésif induisant une adhérence.

5. Système selon l'une quelconque des revendications 1 à 4, **caractérisé en ce** des panneaux sont prévus comme composants (1, 2) et en ce que les rainures (5) des panneaux, en particulier au moins l'une de leurs surfaces de flancs (9), sont pourvues d'un remplissage, en particulier, d'un revêtement, constitué d'un adhésif ou d'une colle (20) qui est stabilisé(e) par élimination d'un solvant ou d'un agent dispersant, de préférence par élimination d'eau, mais qui est (ré)activable au contact avec un solvant, en particulier au moyen d'eau, ou d'humidité, et en ce que les languettes (6) des panneaux, en particulier au moins l'une de leurs surfaces de flancs (11), sont pourvues d'un film ou d'une garniture recouvrant ou au moins mouillant les languettes citées ou d'une imprégnation de surface de ce genre constituée d'un solvant ou d'un agent dispersant pour l'adhésif ou la colle, en particulier de l'eau, comme activateur d'adhésif.

6. Système selon l'une quelconque des revendications 1 à 5, **caractérisé en ce que** des panneaux sont prévus comme composants (1, 2) et **en ce que** les rainures (5) des panneaux, en particulier au moins l'une de leurs surfaces de flancs (9), sont garnies d'un remplissage, en particulier d'un revêtement, constitué d'un adhésif en dispersion (20) stabilisé par élimination d'eau, mais (ré)activable au contact de l'eau ou de l'humidité, en particulier d'une colle de montage à prise rapide à base de poly(acétate de vinyle), par exemple une colle à bois courante du commerce, par exemple à base d'amidon et/ou de protéine.

7. Système selon l'une quelconque des revendications 1 à 6, **caractérisé en ce que** des panneaux sont prévus comme composants (1, 2) et **en ce que** les rainures (5) des panneaux, en particulier au moins une de leurs surfaces de flancs (9), sont recouvertes d'un premier composant, en particulier du composant de résine non durci ou non entièrement durci, d'un adhésif de polymérisation à deux composants, et **en ce que** les languettes, en particulier au moins l'une de leurs surfaces de flancs, sont recouvertes du second composant, en particulier du composant durcisseur, de l'adhésif à deux composants cité, ou vice versa.

8. Système selon l'une quelconque des revendications 1 à 7, **caractérisé en ce que** des panneaux sont prévus comme composants (1, 2) et **en ce que** les rainures (5) ou les languettes (6) des panneaux, en particulier au moins une de leurs surfaces de flancs (9, 11), sont recouvertes d'un second composant, en particulier du composant durcisseur, d'un adhésif de polymérisation à deux composants, de préférence sous la forme d'un vernis durcisseur, et d'un premier composant appliqué par-dessus le composant durcisseur, en particulier par-dessus le vernis durcisseur, en particulier le composant de résine.

9. Système selon la revendication 7 ou 8, **caractérisé en ce que** le composant durcisseur de l'adhésif à deux composants, en particulier le vernis durcisseur, est constitué à base d'un peroxyde organique et le composant de résine à durcir avec ce dernier est constitué à base de méthacrylate.

10. Système selon la revendication 7 ou 8, **caractérisé en ce que** le composant durcisseur de l'adhésif à deux composants, en particulier le vernis durcisseur, est constitué à base d'une polyamine aliphatique ou cycloaliphatique et son composant de résine est constitué à base d'une résine époxyde et/ou d'une résine de bisphénol A et/ou d'une résine de bisphénol F.

11. Système selon l'une quelconque des revendications 1 à 10, dans lequel des panneaux sont prévus comme composants, **caractérisé en ce qu'**au moins l'une des surfaces de flancs de rainure (9) des panneaux est/sont pourvues d'un revêtement ou d'un boudin constitué du composant de résine micro-encapsulé d'un adhésif à deux composants et **en ce qu'**au moins une surface de flanc de languette (11) coopérant par assemblage avec la surface de flanc de rainure (9) respectivement revêtue précitée, est/sont pourvues d'un revêtement ou d'un film ou d'un boudin qui est constitué du composant durcisseur également micro-encapsulé de l'adhésif à deux composant cité, ou vice versa.

12. Système selon l'une quelconque des revendications 1 à 11, dans lequel des panneaux sont prévus comme composants, **caractérisé en ce que** le revêtement des rainures (5) des panneaux, en particulier d'au moins l'une de leurs surfaces de flancs (9), avec l'adhésif stabilisé par élimination d'eau, mais (ré)activable au contact de l'eau ou de l'humidité, présente une épaisseur de couche sensiblement homogène dans la plage de 0,1 à 0,4, en particulier de 0,15 à 0,25 mm, pour des tolérances d'épaisseur dans la plage de ±0,05 mm.
